# EUROPÄISCHE PATENTSCHRIFT

(11) **EP 0 795 443 B1**
(45) Veröffentlichungstag und Bekanntmachung des Hinweises auf die Patenterteilung: **22.09.1999**
(21) Anmeldenummer: 97103486.3
(22) Anmeldetag: 04.03.1997
(51) Int. Cl.: B60R 21/20, F16B 19/10

(54) **Einrichtung zur Befestigung**
Fastening device
Dispositif de fixation

(30) Priorität: 15.03.1996 DE 29604875 U
(43) Veröffentlichungstag der Anmeldung: 17.09.1997
(73) Patentinhaber: TRW Occupant Restraint Systems GmbH, 73551 Alfdorf (DE)
(72) Erfinder: Hirt, Dieter, 73572 Heuchlingen (DE)
(74) Vertreter: Degwert, Hartmut, Dipl.-Phys.

(56) Entgegenhaltungen:
- EP-A- 0 484 527
- EP-A- 0 485 602
- DE-A- 4 434 301
- US-A- 5 176 400

## Beschreibung

Die Erfindung betrifft eine Einrichtung zur Befestigung eines mit einer Halteöffnung versehenen ersten Teils eines Gassackmoduls in einem Insassen-Rückhaltesystem an einem zweiten Teil des Gassackmoduls, das mit einer Durchstecköffnung versehen ist, deren Durchmesser im wesentlichen dem Durchmesser der Halteöffnung entspricht.

Für eine solche Befestigung wird häufig ein Schraubbolzen verwendet, der in der Halteöffnung aufgenommen ist und sich durch die Durchstecköffnung hindurch erstreckt und auf dessen Gewinde eine Mutter aufgeschraubt wird, die mit einer Lösesicherung versehen ist. Nachteilig bei dieser Gestaltung sind die vergleichsweise hohen Kosten für den Schraubbolzen und die zugehörige Mutter sowie der Arbeitsaufwand für das Aufschrauben und Sichern der Mutter. Wird außerdem als Lösesicherung für die Mutter ein flüssiges Kunstharz verwendet, ergeben sich Probleme mit dem aushärtenden Kunstharz, wenn dieses an andere Stellen als den vorgesehenen Einsatzort gelangt.

Bei einer solchen Befestigung kann auch wie im gattungsbildenden Dokument EP-A-0 484 527 gezeigt ein Niet verwendet werden. Nachteilig sind dabei aber die unter Umständen hohen Materialkosten sowie der hohe Arbeitsaufwand, der für das Bilden des Schließkopfes notwendig ist.

Aufgabe der Erfindung ist es, eine Befestigung eines mit einer Öffnung versehenen Teils an einem ebenfalls mit einer Öffnung versehenen anderen Teil zu schaffen, die hinsichtlich Material- und Arbeitsaufwand günstiger als herkömmliche Befestigungsarten ist.

Diese Aufgabe wird erfindungsgemäß durch eine Einrichtung zur Befestigung eines mit einer Halteöffnung versehenen ersten Teils eines Gassackmoduls in einem Insassen-Rückhaltesystem an einem zweiten Teil des Gassackmoduls gelöst, das mit einer Durchstecköffnung versehen ist, deren Durchmesser im wesentlichen dem Durchmesser der Halteöffnung entspricht, mit einer Befestigungshülse aus Metall, die die Halteöffnung und die Durchstecköffnung durchquert, die an ihrem der ersten Teil zugeordneten axialen Ende mit einem Anlagekopf versehen ist und deren entgegengesetztes, dem zweiten Teil zugeordnetes axiales Ende senkrecht zur Längsachse der Befestigungshülse so zusammengequetscht ist, daß durch plastische Materialverformung zwei einander zumindest annähernd diametral gegenüberliegende Anlageflächen gebildet sind, zwischen denen und dem Anlagekopf die beiden Teile in axialer Richtung festgelegt sind. Diese Befestigung ist besonders kostengünstig. Zum einen ist der Aufwand für die Herstellung der Befestigungshülse wesentlich niedriger als derjenige für einen Schraubbolzen mit zugehöriger Mutter, da die Befestigungshülse aus einem herkömmlichen Metallrohr hergestellt werden kann. Zum anderen ist der Aufwand für das eigentliche Befestigen der beiden Teile aneinander besonders niedrig, da ein Zusammenquetschen eines Endes der Befestigungshülse leichter zu erzielen ist als ein Aufschrauben und Sichern einer Mutter oder das Bilden des Schließkopfes eines Niets.

Vorteilhafte Ausführungsformen der Erfindung sind in den Unteransprüchen gegeben.

Die Erfindung wird nachfolgend unter Bezugnahme auf eine bevorzugte Ausführungsform beschrieben, die in der beigefügten Zeichnung dargestellt ist. In dieser zeigen:
- Figur 1 eine geschnittene Teilansicht einer erfindungsgemäßen Befestigung vor dem Schritt des Quetschens der Befestigungshülse;
- Figur 2 eine Draufsicht auf die Befestigungshülse von Figur 1;
- Figur 3 eine Ansicht entsprechend derjenigen von Figur 1 nach dem Schritt des Quetschens der Befestigungshülse; und
- Figur 4 eine Draufsicht auf die Befestigungshülse von Figur 3.

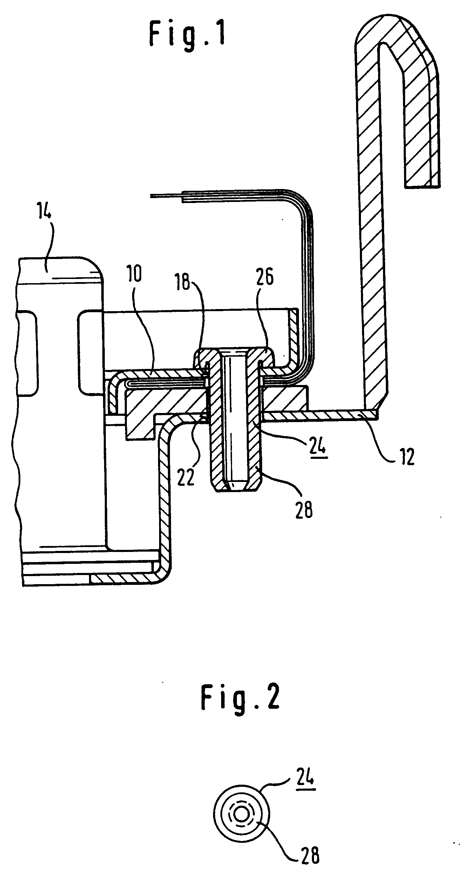

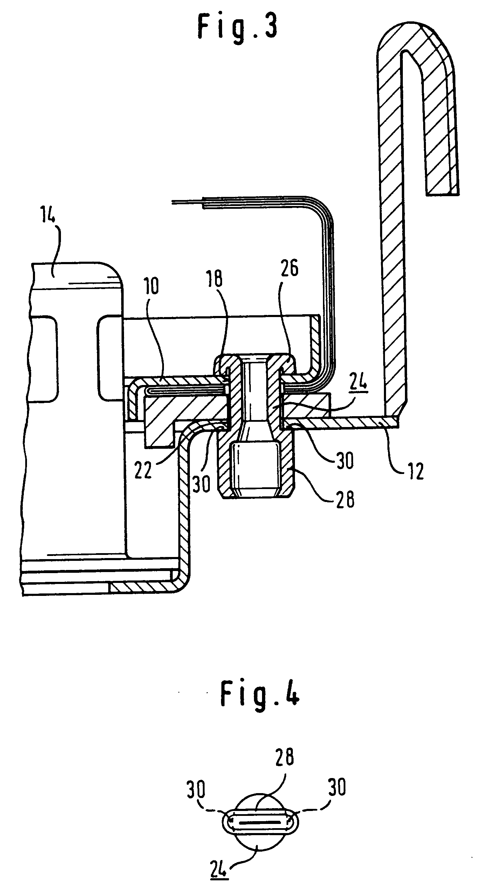

In den Figuren 1 bis 4 ist eine bevorzugte Ausführungsform einer erfindungsgemäßen Befestigung dargestellt, wobei in den Figuren 1 und 2 ein Montagezwischenstadium und in den Figuren 3 und 4 der Endzustand der gebildeten Befestigung gezeigt ist.

In den Figuren 1 und 2 ist ein erstes Teil 10 zu sehen, das an einem zweiten Teil 12 befestigt werden soll. Bei der gezeigten Ausführungsform ist das erste Teil 10 ein Montageflansch eines teilweise dargestellten Gasgenerators 14 eines Gassack-Rückhaltesystems für Fahrzeuge, und das zweite Teil 12 ist eine Platte für die Befestigung des Gasgenerators 14. Das erste Teil 10 ist mit einer Halteöffnung 18 versehen, und das zweite Teil 12 ist mit einer Durchstecköffnung 22 versehen, deren Durchmesser geringfügig größer als der Durchmesser der Halteöffnung 18 ist. Durch diese beiden Öffnungen hindurch erstreckt sich eine Befestigungshülse 24, die aus Metall besteht und im dargestellten Ausführungsbeispiel einen kreisförmigen Querschnitt hat. Das dem ersten Teil 10 zugeordnete axiale Ende der Befestigungshülse 24 ist mit einem Anlagekopf versehen, der bei der dargestellten Ausführungsform durch Umbördeln dieses axialen Endes der Befestigungshülse 24 erhalten ist. Der Durchmesser der Halteöffnung 18 ist so bemessen, daß die Befestigungshülse 24 mit einer Preßpassung in der Halteöffnung sitzt. Somit ist die Befestigungshülse 24 auf einfache Weise in dem ersten Teil 10 festgelegt, wodurch sich Vorteile bei der Montage ergeben. Der Durchmesser der Durchstecköffnung 22 ist so bemessen, daß sich eine Spielpassung mit der Befestigungshülse 24 ergibt, so daß diese leicht in die Durchstecköffnung 22 eingesetzt werden kann.

In den Figuren 3 und 4 ist die Verbindung des ersten Teils 10 mit dem zweiten Teil 12 im Endzustand dargestellt. Der Unterschied zu dem in den Figuren 1 und 2 dargestellten Montagezwischenstadium besteht darin, daß das dem zweiten Teil 12 zugeordnete, aus der Durchstecköffnung 22 herausragende Ende 28 der Befestigungshülse 24 in einer Richtung senkrecht zur Längsachse der Befestigungshülse 24 so zusammengequetscht wurde, daß durch plastische Materialverformung zwei einander zumindest annähernd diametral gegenüberliegende Anlageflächen 30 gebildet wurden. Die beiden aneinander zu befestigenden Teile 10, 12 sind somit in axialer Richtung zwischen dem Anlagekopf 26 und den beiden Anlageflächen 30 gehalten.

Durch die erfindungsgemäße Befestigung ergeben sich einige Vorteile. Da die Befestigungshülse 24 ausgehend von einem herkömmlichen Metallrohr hergestellt werden kann, ergeben sich besonders geringe Materialkosten für die Befestigungshülse. Da an der Befestigungshülse 24, abgesehen vom Ausbilden des Anlagekopfes 26, keine weiteren Bearbeitungsschritte, etwa das Schneiden eines Gewindes, ausgeführt werden müssen, ergeben sich besonders geringe Herstellungskosten. Da ein Quetschen des axialen Endes 28 der Befestigungshülse 24 einfacher auszuführen ist als ein Aufschrauben und Sichern einer Mutter auf einen Schraubbolzen, ergeben sich geringere Montagekosten. Durch ein Zusammenquetschen des axialen Endes 28 in einem geeigneten Abstand von dem zweiten Teil 12 lassen sich die Anlageflächen 30 so ausbilden, daß zwischen diesen und dem Anlagekopf 26 eine Vorspannwirkung erzielt werden kann.

Gemaß einer nicht dargestellten Weiterbildung der erfindungsgemäßen Befestigung ist vorgesehen, daß die Befestigungshülse 24 im Ausgangszustand sowie die Halteöffnung 18 und die Durchstecköffnung 22 einen ovalen Querschnitt haben. Auf diese Weise lassen sich bedeutend größere Anlageflächen 30 als bei einem kreisförmigen Stahlrohr erzielen. Weiterhin kann vorgesehen sein, daß auch der Anlagekopf 26 der Befestigungshülse 24 durch Zusammenquetschen eines axialen Endes der Befestigungshülse gebildet ist.

## Patentansprüche

1. Einrichtung zur Befestigung eines mit einer Halteöffnung (18) versehenen ersten Teils (10) eines Gassackmoduls in einem Insassen-Rückhaltesystem an einem zweiten Teil (12) des Gassackmoduls, das mit einer Durchstecköffnung (22) versehen ist, deren Durchmesser im wesentlichen dem Durchmesser der Halteöffnung (18) entspricht,
mit einer Befestigungshülse (24) aus Metall, die die Halteöffnung (18) und die Durchstecköffnung (22) durchquert, die an ihrem dem ersten Teil (10) zugeordneten axialen Ende mit einem Anlagekopf (26) versehen ist, dadurch gekennzeichnet, daß das entgegengesetzte, dem zweiten Teil (12) zugeordnete axiale Ende senkrecht zur Längsachse der Befestigungshülse (24) so zusammengequetscht ist, daß durch plastische Materialverformung zwei einander zumindest annähernd diametral gegenüberliegende Anlageflächen (30) gebildet sind, zwischen denen und dem Anlagekopf (26) die beiden Teile (10, 12) in axialer Richtung festgelegt sind.

2. Einrichtung nach Anspruch 1, dadurch gekennzeichnet, daß der Anlagekopf (26) durch Umbördeln eines axialen Endes der Befestigungshülse (24) gebildet ist.

3. Einrichtung nach Anspruch 1, dadurch gekennzeichnet, daß der Anlagekopf (26) durch Zusammenquetschen eines axialen Endes der Befestigungshülse (24) senkrecht zur deren Längsachse gebildet ist.

4. Einrichtung nach einem der vorhergehenden Ansprüche, dadurch gekennzeichnet, daß die Befestigungshülse (24) in der Halteöffnung (18) mit einer Presspassung sitzt.

5. Einrichtung nach einem der vorhergehenden Ansprüche, dadurch gekennzeichnet, daß die Befestigungshülse (24) im Ausgangszustand einen ovalen Querschnitt hat.

6. Einrichtung nach einem der vorhergehenden Ansprüche, dadurch gekennzeichnet, daß die Befestigungshülse (24) im Ausgangszustand einen kreisförmigen Querschnitt hat.

7. Einrichtung nach einem der vorhergehenden Ansprüche, dadurch gekennzeichnet, daß das erste Teil (10) ein Montageflansch eines Gasgenerators (14) eines Gassack-Rückhaltesystem für Fahrzeuge und das zweite Teil (12) eine Befestigungsplatte für den Gasgenerator (14) ist.

## Claims

1. A device for fastening a first part (10), provided with a holding opening (18), of a gas bag module in a vehicle occupant restraint system to a second part (12), provided with an insertion opening (22), of said gas bag module, the diameter of said insertion opening substantially corresponding to the diameter of said holding opening (18), comprising a metallic fastening sleeve (24) which passes through said holding opening (18) and said insertion opening (22) and which is provided with an abutment head (26) at its axial end associated with said first part (10), characterized in that the opposite axial end associated with said second part (12) is crimped together perpendicular to the longitudinal axis of said fastening sleeve (24) such that by plastic material deformation two abutment surfaces (30) are formed at least approximately diametrically opposed to each other, said two parts (10, 12) being fixed in place in the axial direction between said abutment surfaces and said abutment head (26).

2. The device according to claim 1, characterized in that said abutment head (26) is formed by beading an axial end of said fastening sleeve (24).

3. The device according to claim 1, characterized in that said abutment head (26) is formed by crimping an axial end of said fastening sleeve (24) perpendicular to its longitudinal axis.

4. The device according to any of the preceding claims, characterized in that said fastening sleeve (24) is received in said holding opening (18) with a press fit.

5. The device according to any of the preceding claims, characterized in that said fastening sleeve (24) has in its initial state an oval cross-section.

6. The device according to any of the preceding claims, characterized in that said fastening sleeve (24) has in its initial state a circular cross-section.

7. The device according to any of the preceding claims, characterized in that said first part (10) is a mounting flange of a gas generator (14) of a gas bag restraint system for vehicles and said second part (12) is a fastening plate for said gas generator (14).

## Revendications

1. Dispositif de fixation d'une première partie (10), pourvue d'un orifice de maintien (18), d'un module de coussin à gaz dans un système de retenue de passagers à une deuxième partie (12) du module de coussin à gaz qui est pourvue d'un orifice débouchant (22) dont le diamètre correspond sensiblement au diamètre de l'orifice de maintien (18), comprenant une douille de fixation (24) en métal qui traverse l'orifice de maintien (18) et l'orifice débouchant (22), qui est pourvue d'une tête d'appui (26) à son extrémité axiale associée à la première partie (10), caractérisé en ce que l'extrémité axiale située à l'opposé et associée à la deuxième partie (12) est écrasée perpendiculairement à l'axe longitudinal de la douille de fixation (24), de façon à créer par déformation plastique du matériau deux surfaces d'appui (30) au moins sensiblement diamétralement opposées qui, conjointement avec la tête d'appui (26), enserrent les deux parties (10, 12) dans la direction axiale.

2. Dispositif selon la revendication 1, caractérisé en ce que la tête d'appui (26) est formée en rabattant l'une des extrémités axiales de la douille de fixation (24).

3. Dispositif selon la revendication 1, caractérisé en ce que la tête d'appui (26) est formée en écrasant l'une des extrémités axiales de la douille de fixation (24) perpendiculairement a son axe longitudinal.

4. Dispositif selon l'une des revendications précédentes, caractérisé en ce que la douille de fixation (24) est logée dans l'orifice de maintien (18) avec un ajustement serré.

5. Dispositif selon l'une des revendications précédentes, caractérisé en ce que, à l'état initial, la douille de fixation (24) a une section transversale ovale.

6. Dispositif selon l'une des revendications précédentes, caractérisé en ce que, à l'état initial, la douille de fixation (24) a une section transversale circulaire.

7. Dispositif selon l'une des revendications précédentes, caractérisé en ce que la première partie (10) est une bride de montage d'un générateur de gaz (14) d'un système de retenue à coussin à gaz pour véhicules, et la deuxième partie (12) est une plaque de fixation pour le générateur de gaz (14).
